Europäisches Patentamt

European Patent Office

Office européen des brevets

(11) Veröffentlichungsnummer: **0 372 257**
**A1**

(12) ## EUROPÄISCHE PATENTANMELDUNG

(21) Anmeldenummer: **89120940.5**

(22) Anmeldetag: **11.11.89**

(51) Int. Cl.5: **H04N 5/76, H04N 5/44**

(30) Priorität: **02.12.88 DE 3840585**

(43) Veröffentlichungstag der Anmeldung:
**13.06.90 Patentblatt 90/24**

(84) Benannte Vertragsstaaten:
**AT DE FR IT**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth/Bay.(DE)**

(72) Erfinder: **Kornhaas, Wolfgang Grundig E.M.V.**
**Max Grundig**
**Hollländ. Stiftung & Co KG Kurgartenstrasse**
**37**
**D-8510 Fürth/Bay(DE)**

(54) **Signalquellenauswahl und -umschaltung über Bildschirmdialogseiten.**

(57) Bei Videorecordern, die die Möglichkeit zur Bildmanipulation bieten, entsteht das Problem, die Signalquellen auszuwählen und die Bildmanipulation zu programmieren, ohne eine große oder unübersichtliche Bedieneinheit zu benötigen. Dieses Problem wird dadurch gelöst, daß die Signalquellenanwahl und -umschaltung über Bildschirmdialogseiten erfolgt, wobei die gewünschten Funktionen mit Hilfe eines steuerbaren Anzeigeelements ausgewählt werden.

EP 0 372 257 A1

# SIGNALQUELLENAUSWAHL UND -UMSCHALTUNG ÜBER BILDSCHIRMDIALOGSEITEN

Die Erfindung betrifft ein Verfahren zur benutzerfreundlichen Auswahl von Signalquellen bei Videorecordern der gehobenen Klasse, an die z.B. für Bildmanipulationen eine größere Anzahl von Signalquellen angeschlossen sind.

Besonders bei Videorecordern stellt sich immer mehr das Problem eine Bedieneinheit zu schaffen, mit der die Vielzahl der Funktionen mit einer möglichst geringen Anzahl von Bedienelementen ausgewählt werden können und die Bedienung trotzdem leicht erlernbar oder sich selbst erklärend ist.

Zur Bedienung, insbesondere zur Timer-Programmierung von Videorecordern sind Verfahren der bildschirmorientierten Bedienung bekannt. So wird in der Patentschrift EP-PS 0 115 145 beschrieben, wie eine automatische Aufnahme mit Hilfe einer am Bildschirm angezeigten Wochenzeittafel erfolgt. Hierzu wird ein steuerbares Anzeigeelement in eine gewünschte Position gebracht, die den Aufnahmezeitpunkt bestimmt.

Aus der Patentschrift DE-PS 33 35 082 ist ein Verfahren bekannt, bei der die Programmierung eines Videorecorders über die Programmseiten des Videotextes gesteuert wird. Die Auswahl erfolgt durch eine Markierung, die vom Benutzer gesteuert werden kann, oder, wie es im zugehörigen Zusatzpatent DE-PS 33 37 204 beschrieben ist, daß die Markierung zyklisch durchläuft, wobei sie bei jedem Titel kurze Zeit steht, in der der Benutzer mit einem Tastenandruck diesen Titel auswählen kann.

Ausgehend von diesem Stand der Technik und der ständigen Erweiterung der Möglichkeiten, insbesondere der Möglichkeit zur Bildmanipulation - z.B. Bild-im-Bild-Darstellung, Farbverzerrungen, Negativ-Bilder, usw. - und der damit verbundenen Auswahl von Signalquellen liegt der Erfindung die Aufgabe zugrunde eine Form der Bedienung anzugeben, die leicht erlernbar bzw. sich selbst erklärend und die unabhängig von anderen nicht beeinflußbaren Einrichtungen, wie z.B. Videotext bei der Timer-Programmierung ist.

Diese Aufgabe wird durch ein Verfahren mit den in Anspruch 1 angegebenen, kennzeichnenden Merkmalen gelöst. Vorteilhafte Weiterbildungen bzw. Ausführungen ergeben sich aus den Unteransprüchen.

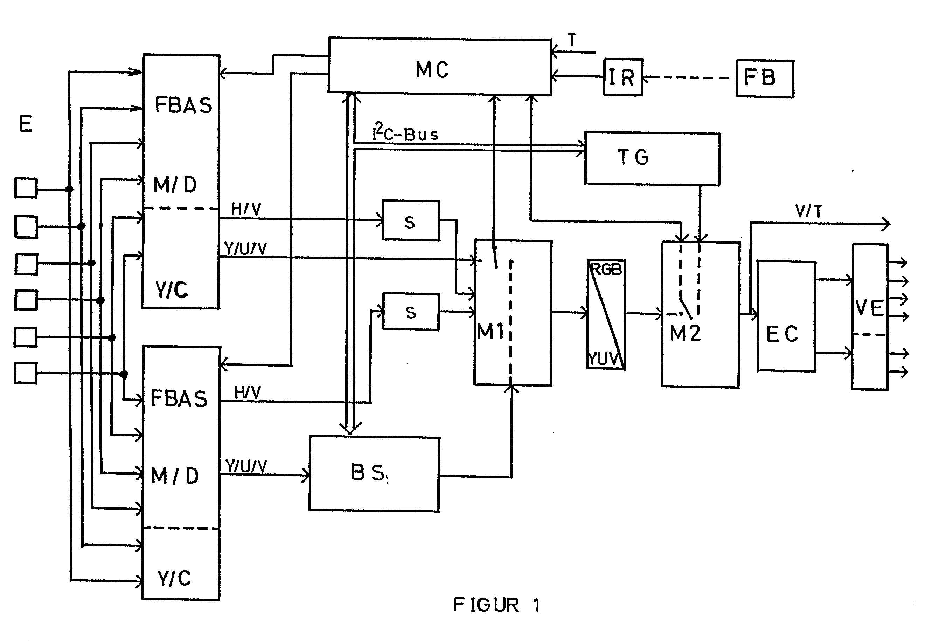

Die Erfindung wird im folgenden anhand eines Ausführungsbeispiels unter Zuhilfenahme der Tabelle 1, die ein Beispiel für ein Menü zeigt, und der Figur 1, die ein Blockschaltbild der verwendeten Anordnung zeigt, erläutert.

Bei Videorecordern, die die Möglichkeit zur Bildmanipulation bieten, wird erfindungsgemäß zur Bedienung, d.h. zur Auswahl der Signalquellen und deren Umschaltung sowie zur Steuerung des Ablaufes auf Tastendruck ein Menü auf einer Anzeigeeinheit, z.B. dem Bildschirm eines Fernsehgerätes angezeigt, wobei die Menüs üblicherweise so aufgebaut sind, daß nach einer Auswahl aus einem allgemeinen Angebot dieses von Stufe zu Stufe spezieller wird. Auf diese Weise entsteht eine Bedienung, die leicht erlernbar ist, da sie in logischen Schritten aufgebaut ist, und sich somit selbst erklärt. Ein solches Beispiel zeigt Tabelle 1.

Nachdem mit einer separaten Taste B das Grundmenü M1 ausgewählt wurde, bringt man ein steuerbares Anzeigeelement (mit Hilfe der Steuertasten S - hier vier Pfeile für die vier möglichen Richtungen) in die gewünschte Position, d.h. in die Zeile, in der die gewünschte Funktion steht, was in Tabelle 1 "Bild-im-Bild-Darstellung" ist. Diese Wahl wird mit der Taste B - hier in der Mitte der vier Richtungspfeile -bestätigt. Die Taste zum Aufruf des Grundmenüs und zum Bestätigen der Auswahl können verschieden oder, wie im vorliegenden Beispiel, gleich sein. Nach der Bestätigung erscheint auf dem Bildschirm das ausgewählte Menü M2, in diesem Beispiel "Bild-im-Bild-Darstellung". Mit den Steuertasten wird das Anzeigeelement wieder auf die gewünschte Funktion geschoben, wobei zunächst die Signalquelle für das Großbild ausgewählt wird. Nach der Bestätigung wird in der Spalte Kleinbild die zweite Siganlquelle ausgewählt. Nachdem auch diese bestätigt wurde, kann man in ein weiteres Menü oder zurück in das Grundmenü gehen. Bei jeder Bestätigung wird die ausgewählte Funktion mit dem verglichen, was eingegeben wurde und auf Sinnfälligkeit überprüft. Wird ein Eingabefehler festgestellt, so erscheint am Bildschirm eine Meldung, und die letzte Eingabe muß wiederholt werden. Wird bei der Überprüfung kein Fehler festgestellt, dann werden die Signalquellen durchgeschaltet und die gewünschte Funktion wird ausgeführt.

In Figur 1 ist das Blockschaltbild einer möglichen Ausführungsform dargestellt. Hier sind für die Bildmanipulation externe Anschlüsse E vorgesehen für einen oder mehrere Tuner, Cameras, Camcorder sowie zwei S-VHS-Anschlüsse für Cameras oder Recorder mit Y/C-Signal. Weiterhin sind als interne Signalquellen eine digitale Bildspeichereinheit BS vorgesehen sowie ein Text- und Grafik-Generator.

Über einen Infrarotempfänger IR oder über die Tastatureingabe T am Gerät werden die Steuerzeichen, die der Benutzer eingibt, an den Mikro-Computer MC gegeben. Der Mikro-Computer übernimmt dabei folgende Aufgaben:

- Er steuert den Text-/Grafik-Generator TG. Dieser erzeugt die Menütafel, die auf dem Bildschirm dargestellt wird sowie das steuerbare Anzeigeelement.

- Er übernimmt die Auswertung der eingebenen Daten und überprüft sie auf Eingabefehler.

- Wenn die Eingaben fehlerlos sind steuert er die Multiplexer-Decoder-Einheiten M/D, welche die ausgewählten Signalquellen durchschalten und die angebotenen Signalart in einheitliche Y/U/V-Signale (Komponentensignale) umwandeln, wobei in den Multiplexer-Decoder-Einheiten M/D auch noch Synchronisationssignale H/V für Horizontal/Vertikal-Ablenkung erzeugt werden, die in den Synchronisationseinheiten S verarbeitet werden.

- Wenn ein Kleinbild eingeben werden soll, bzw. wenn das Bild manipuliert werden soll, steuert er die Aufnahme des Bildes in den Bildspeicher BS und danach seine Eintastung in das Großbild über den Multiplexer M1 sowie die Wandlung des Y/U/V-Signals in ein RGB-Signal.

- Er steuert ebenso den Multiplexer M2, in dem die Eintastung von dem im Text-/Grafik-Generator erzeugten Menübild, bzw. von sonstigen Texten bzw. Grafiken, die in diesem Baustein erzeugt werden, durchgführt wird.

Am Ausgang des Multiplexers M2 steht dann ein RGB-Bildsignal an, das an die Video-/Tonköpfe für die Aufnahme bzw. nach Codierung im Encoder EC über eine Verteilereinheit VE an andere Geräte ausgegeben wird.

M 1

```
Uhr-Programmierung

Senderbelegung

Timer-Programmierung

┌─────────────────────────┐
│ Bild-im-Bild-Darstellung │
└─────────────────────────┘
            .
            .
            .

Sprachwahl

Exit Menü
```

M 2

| Bild-im-Bild | |
|---|---|
| **Großbild** | **Kleinbild** |
| Euro-AV | Euro-AV |
| Kamera | ┌─────────┐ |
| | │ Kamera │ |
| | └─────────┘ |
| ┌─────────┐ | Tuner |
| │ Tuner │ | |
| └─────────┘ | Recorder |
| Recorder | DOS |
| DOS | Videotext |
| Videotext | . |
| . | . |
| . | . |
| . | |

```
┌──────────┐
│ Tasten-  │
│ feld     │
│          │
│   FB     │
└──────────┘
```

Tabelle 1

**Ansprüche**

1. Einrichtung zur benutzerfreundlichen Auswahl von Signalquellen die an einem mit einem Mikro-Computer und Textgenerator ausgestattetem Videorecorder angeschlossen sind, wobei die Darstellung der gespeicherten Texttafeln mit einem angeschlossenem Bildwiedergabegerät erfolgt, **dadurchgekennzeichnet, daß**
- auf dem Bildschirm verschiedene Signalquellen in Form einer Menütafel tabellarisch aufgelistet werden;
- die Anwahl der Signalquellen mittels eines auf dem Bildschirm sichtbaren, steuerbaren Anzeigeelements, das vom Benutzer geführt wird, erfolgt;
- die ausgewählte Signalquelle mit einer separaten Taste der Bedieneinheit bestätigt und durchgeschaltet wird.

2. Einrichtung nach Anspruch 1, **dadurch gekennzeichnet**, daß ausgehend von einem Grundmenü einzelne Menüs für spezielle Anforderungen über die Bedieneinheit ausgewählt werden.

3. Einrichtung nach Anspruch 1 oder 2, **dadurch gekennzeichnet**, daß der Mikro-Computer die eingegebenen Werte auf Sinnfälligkeit überprüft, und bei unsinniger Wahl ein Fehlersignal ausgibt.

4. Einrichtung nach einem oder mehreren der Ansprüche 1 bis 3, **dadurch gekennzeichnet**, daß alle Signalquellen immer am Gerät angeschlossen bleiben und die gewünschten Signalquellen durch die menügesteuerte Anwahl elektronisch durchgesteuert werden.

5. Einrichtung nach einem oder mehreren der Ansprüche 1 bis 4, mit einer Bedieneinheit zur Auswahl einer von mehreren Signalquellen und einer Anzeigeeinheit zur Darstellung der Menüs, **dadurch gekennzeichnet**, daß die Bedieneinheit unter anderem vier Tasten zum Bewegen des Anzeigeelements und eine Taste zum Bestätigen der ausgewählten Funktion enthält.

6. Einrichtung nach Anspruch 5, **dadurch gekennzeichnet**, daß sie über verschiedene Signalquelleneingänge verfügt die auf einen oder mehrere Multiplex-Decoder-Bausteine geführt werden, wobei diese Bausteine jeweils für die Auswahl des Signals für das Groß- bzw. ein Kleinbild bei einer Bild-im-Bild-Darstellung vorgesehen sind.

7. Einrichtung nach Anspruch 6, **dadurch gekennzeichnet**, daß das Kleinbild in einer digitalen Bildspeichereinheit zwischengespeichert wird.

8. Einrichtung nach Anspruch 7, **dadurch gekennzeichnet**, daß in der Bildspeichereinheit das Bild durch verschiedene Manipulationen nach Wunsch verändert wird.

9. Einrichtung nach einem oder mehreren Ansprüchen 1 bis 8, **dadurchgekennzeichnet**, daß der Mikro-Computer die über die Tastatur angegebenen Befehle verarbeitet und an die entsprechenden Bauelemente bzw. Gruppen die notwendigen Stuersignale für den gewünschten Ablauf ausgibt.

FIGUR 1

## DOCUMENTS CONSIDERED TO BE RELEVANT

EP 89120940.5

| Category | Citation of document with indication, where appropriate, of relevant passages | Relevant to claim | CLASSIFICATION OF THE APPLICATION (Int Cl⁵) |
|---|---|---|---|
| X | <u>DE - A1 - 3 724 975</u> (KABUSHIKI) <br> * Zusammenfassung; Fig. 9,12; Ansprüche 1-5 * | 1-4,9 | H 04 N 5/76 <br> H 04 N 5/44 |
| X | <u>US - A - 4 786 967</u> (SMITH) <br> * Zusammenfassung; Fig. 1; Spalte 2, Zeilen 4-45; Spalte 3, Zeile 28-Spalte 4, Zeile 15; Ansprüche 1,34 * | 1,2,4, 9 | |
| A | <u>AT - B - E 15 427</u> (SYNDICAT) <br> * Seite 2, Zeile 53 - Seite 3, Zeile 26; Anspruch 4 * | 1,6 | |
| A | <u>DE - A1 - 3 228 354</u> (STANDARD) <br> * Zusammenfassung; Seite 10, Zeilen 6-15 * | 1,3 | |
| A | <u>US - A - 4 706 121</u> (YOUNG) <br> * Fig. 5; Spalte 9, Zeile 47 - Spalte 10, Zeile 10 * | 1,5 | **TECHNICAL FIELDS SEARCHED (Int Cl⁵)** <br><br> H 04 N 5/00 <br> H 04 N 7/00 |

The present search report has been drawn up for all claims

| Place of search | Date of completion of the search | Examiner |
|---|---|---|
| WIEN | 26-02-1990 | DIMITROW |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82